(19) Europäisches Patentamt / European Patent Office / Office européen des brevets

(11) **EP 1 897 199 B1**

(12) **EUROPEAN PATENT SPECIFICATION**

(45) Date of publication and mention
of the grant of the patent:
**26.10.2011   Bulletin 2011/43**

(51) Int Cl.:
***H02J 3/00*** *(2006.01)*

(21) Application number: **05706544.3**

(22) Date of filing: **03.03.2005**

(86) International application number:
**PCT/CH2005/000125**

(87) International publication number:
**WO 2006/092067 (08.09.2006 Gazette 2006/36)**

(54) **MANAGING CONGESTION IN AN ELECTRICAL POWER TRANSMISSION NETWORK**

STAUVERWALTUNG IN EINEM ELEKTRISCHEN STROMÜBERTRAGUNGSNETZ

GESTION DE L'ENCOMBREMENT DANS UN RESEAU DE TRANSPORT D'ENERGIE ELECTRIQUE

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**12.03.2008   Bulletin 2008/11**

(73) Proprietor: **ABB RESEARCH LTD.**
**8050 Zürich (CH)**

(72) Inventors:
• **YUEN, Cherry**
  **CH-5400 Baden (CH)**
• **LARSSON, Mats**
  **CH-5400 Baden (CH)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(56) References cited:
**WO-A-2004/079549**

• **WANG X ET AL: "Optimal allocation of transmission rights in systems with FACTS devices" IEE PROCEEDINGS: GENERATION, TRANSMISSION AND DISTRIBUTION, INSTITUTION OF ELECTRICAL ENGINEERS, GB, vol. 149, no. 3, 13 May 2002 (2002-05-13), pages 359-366, XP006018109 ISSN: 1350-2360**
• **SHIRANI A R ET AL: "Traceable flow method in determination of congestion cost assignment in open access power system network" IEEE/PES TRANSMISSION AND DISTRIBUTION CONFERENCE AND EXHIBITION 2002 : ASIA PACIFIC. YOKOHAMA, JAPAN, OCT. 6 - 10, 2002, IEEE/PES TRANSMISSION AND DISTRIBUTION CONFERENCE AND EXPOSITION, NEW YORK, NY : IEEE, US, vol. VOL. 1 F 3, 6 October 2002 (2002-10-06), pages 734-738, XP010630402 ISBN: 0-7803-7525-4**

**Description**

FIELD OF THE INVENTION

The invention is concerned with managing power flow in electrical power transmission networks, and, more particularly, relates to congestion management in electrical transmission networks comprising parallel transmission paths for carrying power from a power generating unit to a load as well as a Power Flow Control Device for adjusting a distribution of power flow on the transmission paths.

BACKGROUND OF THE INVENTION

Consumption of electrical energy has increased manifolds over the past few decades. Electrical energy finds its use in communications, entertainment, businesses, etc. that are heavily dependent upon electrical energy for operations. In order to transfer electrical energy from the source of generation to the source of consumption, power distribution systems or grids are utilized. Also known as electrical transmission networks, these grids provide electrical energy to households, businesses, manufacturing facilities, etc.

Since a huge amount of electrical energy is transmitted, managing the power flow that takes place through the electrical transmission network can be difficult. In typical electrical transmission networks, power flow is divided over multiple paths according to the least impedance principle to any given load where it is consumed. Such electrical transmission networks are highly dynamic and operations are often concerned with balancing generation with load. In response to a change in network state, loads or power injected by generating units, power flow over alternate transmissions paths may need to be redistributed in order to avoid violations of operational constraints on individual network components. These adjustments are made according to the topology of, as well as the current electrical flow situation in, the electrical transmission network.

The challenges of power flow management in electrical transmission networks have significantly increased due to integration of power systems across several regions. Changes in price levels and/or demand for power at different points in the electrical transmission network may result in congestion. The consequences of congestion include price spikes, load dropping, and if these measures do not suffice, loss of power distribution to one or more regions.

Wang et al disclose in "Optimal allocation of transmission rights in systems with FACTS devices" (IEE PROCEEDINGS: GENERATION, TRANSMISSION AND DISTRIBUTION, INSTITUTION OF ELECTRICAL ENGINEERS, GB, vol. 149, no. 3, 13 May 2002, pages 359 - 366, ISSN: 1350 - 2360) a method of managing congestion in an electrical power transmission network comprising electrically parallel transmission paths between a power generating unit and a load as well as a FACTS for adjusting a distribution of power flow on the transmission paths, the method comprising:

-    determining a reference parameter of an injection/extraction point;

-    setting up an optimisation problem comprising an objective function and a set of constraints, and being based on the reference parameter of a power exchange point, a regulating bid, an variable associated of a power exchange point, a power flow in the transmission network, and a set point of the FACTS, wherein the objective function represents the profit of a transmission congestion contract auction in the transmission network, and wherein the variable associated of a power exchange point and the set point of the PFD are decision variables,

-    solving the optimization problem to maximize the objective function for a set of decision variables respecting the set of constraints; and

-    applying the set of decision variables to maximize the profit of a transmission congestion contract in the electrical power transmission network.

An approach to power flow management employs a Day-Ahead Market (DAM) for energy methodology. An exemplary DAM for Energy includes demand bidding and virtual supply and demand bids and offers. By noon on the day before the operating day, market participants submit market information to an Independent System Operator (ISO). The market information submitted to the ISO includes information about generating units, Load Serving Entities (LSE), and participants. The generating units essentially offer to supply energy and regulation service to the market and operating characteristics of generating units for consideration in the clearing of the DAM. The LSE bid to buy energy in the DAM and the participants make virtual supply offers and demand bids.

The ISO clears the DAM on the day before the operating day and publishes the cleared quantities and prices. The DAM bid and offered quantities and prices that clear, are financially binding upon the participants who submitted them. As there exists a different price structure in regions that are competing, bottlenecks are observed in the potential energy transmission between them. This leads to congestion when the ISO tries to equilibrate the prices by transmitting more power than allowed.

There is also a provision for up-regulation and down-regulation bids in a second or further market. These bids denote the quantity of energy and the price the generating units are willing to add or subtract in order to deviate from what was agreed upon in the previous round ignoring congestion, resulting in more or less power generated.

However, such energy market clearing mechanisms do not take into account the possibility of redistributing power flow on electrically parallel transmission paths, by using so-called Power Flow Control Devices (PFD) to maximize the total transfer capability while respecting operational constraints on individual network components.

DESCRIPTION OF THE INVENTION

The invention is defined by the method and system for managing congestion in an electrical power transmission network in claims 1 and 4, and by a corresponding computer program as depicted in claim 7.

It is therefore an objective of the invention to provide a flexible and effective way of managing congestion in an electrical power transmission network comprising Power Flow Control Devices (PFD) for controlling power flow. This objective is achieved by a method of, a system for and a computer program for managing congestion in an electrical power transmission network comprising electrically parallel transmission paths between a power generating unit and a power load as well as a Power Flow Control Device (PFD) for adjusting a distribution of power flow on the transmission paths according to claims 1, 4 and 7, respectively. Further preferred embodiments are evident from the dependent patent claims.

According to the invention, congestion management of an electrical power transmission network is performed by taking advantage of the flexibility in creating the total transmission capability resulting from the use of PFDs. In addition to an actual generation schedule of the power generating units, also the set points of the PFDs are employed as additional decision variables in an optimisation problem, resulting in a broader range of possible power flow solutions consistent with the respective transmission capabilities of the network than without PFDs. Consequently, the congestion cost in the transmission network, i.e. the difference between the amount of money to be received and/or paid when a) ignoring and b) respecting congestion constraints, may be further optimised.

The invention includes determination of a reference generation schedule of at least one power generating unit followed by setting up of an optimisation problem comprising a set of constraints or boundary conditions and an objective function representing the congestion cost. The optimisation problem involves the reference generation schedule, a power flow in the electrical transmission network, regulating bids from market participants, as well as the actual generation schedule and the set points of the PFDs. The method then solves the optimisation problem to minimize the objective function for a set of decision variables and applies this set of decision variables to minimize congestion costs in the electrical transmission network.

In advantageous embodiments of the invention, the reference generation schedule is determined based on supply and demand bids from the market participants, i.e. the power generating units and the power consumers or loads. Only regulating bids from the power generating units however are considered in the optimisation problem, such that the loads are unaffected by the optimisation that is entirely negotiated between an Independent System Operator and the power generating units. In other words, the amount of demand does not vary with the resulting market settlement price and congestion cost, which considerably simplifies the procedure.

In a preferred variant of the invention, the PFD is a series capacitor, a Phase-Angle Reactor (PAR), a series reactor, or a Flexible Alternating Current Transmission System (FACTS) device. The latter include Static-Var Compensator (SVC), Thyristor-Controlled Series Capacitors (TSCSs), phase-shifting transformers, impedance modulators, series compensation capacitors, and the like. These devices are installed at transmission line stations to adjust power flow in each transmission line, so that power can be guided to flow in a safe, stable and balanced manner in a large number of lines within the electrical transmission network.

BRIEF DESCRIPTION OF THE DRAWINGS

The subject matter of the invention will be explained in more detail in the following text with reference to the preferred exemplary embodiments illustrated in the attached drawings, of which:

Fig.1 depicts a model of a two-area power system,
Fig.2 is a flowchart depicting a method of managing congestion in an electrical transmission network, according to an embodiment of the present invention;
Fig.3 schematically depicts the basic elements of a system for managing congestion in an electrical transmission network, according to an embodiment of the present invention; and
Fig.4 schematically depicts the basic approach for managing congestion in an electrical transmission network, according to an embodiment of the present invention.

The reference symbols used in the drawings, and their meanings, are listed in summary form in the list of reference symbols. In principle, identical parts are provided with the same reference symbols in the figures.

DETAILED DESCRIPTION OF PREFERRED EMBODIMENTS

The detailed description in connection with the appended drawings is intended as a description of the presently preferred embodiments of the invention, and is not intended to represent the only form in which the present invention may be practiced , which is only limited by the scope of the invention as defined by the appended claims.

The present invention provides a method and system for managing congestion in an electrical power transmission network. The electrical transmission network includes at least one power generating unit and at least one Power Flow Control Device (PFD). The method includes determination of a reference generation schedule of the power generating units followed by setting up of an optimisation problem including an objective function and a set of constraints, and based on the reference generation schedule, a power flow in the electrical transmission network, bids for regulation, an actual generation schedule, and set points of PFDs. An optimisation problem is solved to minimize the objective function for a set of decision variables and the set of decision variables is applied in order to minimize congestion in the electrical transmission network.

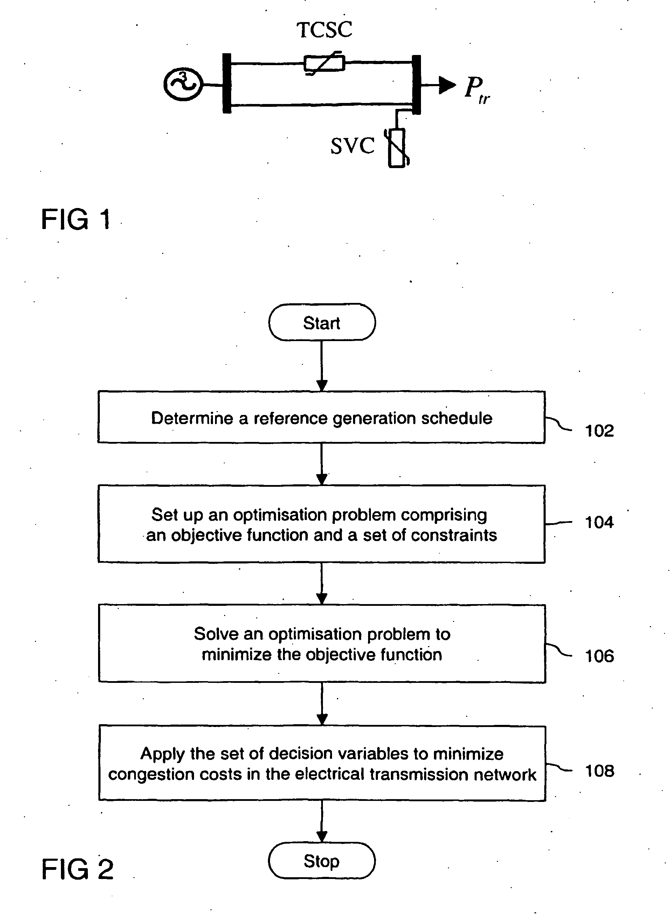

For illustrative purposes, a model of a simple two-area power system is depicted in Fig.1. The generation unit is modeled as an ideal or stiff voltage source and each of the two lines as pure reactances. Furthermore, one of the lines has a PFD installed. The line with the PFD is modeled as a varying apparent reactance $jX1$ depending on its set point $u_{sp}$, whereas the other line has a fixed reactance $jX_2$. The load bus to the right has a Static Var Compensator SVC. The SVC and its associated set point controller is modeled as a variable admittance $jB_{svc}$. A load current is drawn through a purely resistive load admittance $pG_1$ where $p$ is simply a scale factor of the load used to investigate the maximum loadability. An analysis of this system shows that the maximum loadability is increased either by increasing the compensation by the PFD, that is, by a reduction of the apparent line reactance $X_1$, or by increasing the compensation by the SVC, that is, by an increase of the susceptance $B_{svc}$

Referring now to Fig.2, a flowchart depicts a method of managing congestion in an electrical transmission network, according to an embodiment of the present invention. The electrical transmission network includes power generating units and PFDs. The PFDs are used to adjust properties of the electrical transmission network to change a distribution of power flow on electrically parallel transmission paths. Exemplary PFDs include series capacitors, Phase-Angle Reactors (PARs), series reactors, and Flexible Alternating Current Transmission Systems (FACTS) devices. FACTS devices include Static-Var Compensators (SVCs) and Thyristor-Controlled Series Capacitors (TSCSs), phase-shifting transformers, impedance modulators, and series compensation capacitors.

These devices are installed at transmission line stations to adjust power flow in each transmission line, so that power can be guided to flow in a safe, stable and balanced manner in a large number of lines within the electrical transmission network. FACTS devices improve dynamic performance of electrical transmission networks. They are designed to provide stability enhancements, thereby allowing transmission facilities to be loaded to levels approaching their ultimate thermal capacity. These devices may supply reactive power to support voltage or provide modulation to damp electromechanical oscillations.

At step 102, a reference generation schedule is determined. A set of power generating units that generate electrical energy for the electrical transmission network takes this reference generation schedule to generate electrical energy. At step 104, an optimisation problem comprising an objective function and a set of constraints is set up. The optimisation problem involves the reference generation schedule, a power flow in the electrical transmission network, bids for regulation, an actual generation schedule, and at least one set point of the PFDs. The actual generation schedule and the set points of the PFDs are decision variables, whereas the reference generation schedule and the bids for regulation are fixed parameters, of an objective function. The objective function essentially represents a congestion cost in the electrical transmission network and is used to determine a cost to be paid by an Independent System Operator (ISO) to the generating units for deviating from a reference schedule agreed upon earlier.

At step 106, an optimisation problem is solved to minimize the objective function for a set of decision variables. Subsequently, at step 108, the set of decision variables is applied in the electrical transmission network to minimize congestion costs.

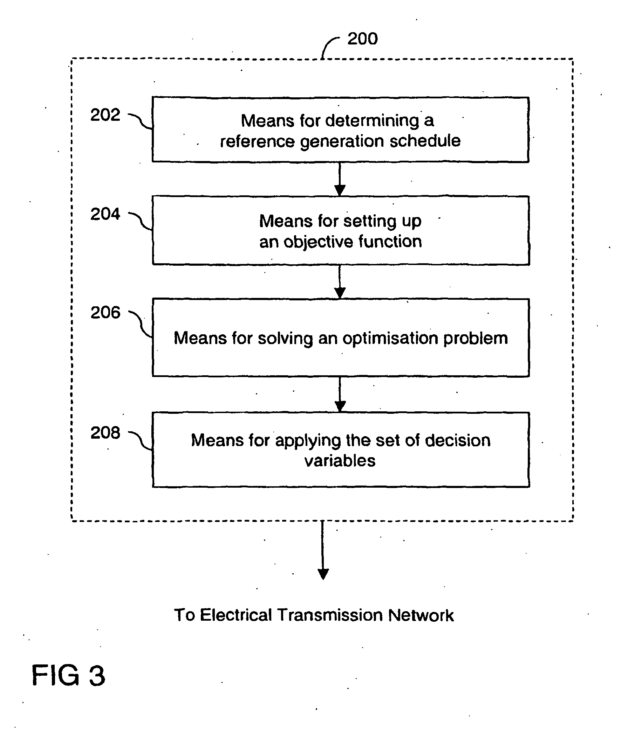

Fig.3 schematically depicts the basic elements of a system for managing congestion in an electrical transmission network, according to an embodiment of the present invention. System for managing congestion 200 includes a means for determining a reference generation schedule 202 for power generating units, a means for setting up an objective function 204, a means for solving an optimisation problem 206, and a means for applying the set of decision variables 208. The elements of the system for managing congestion 200 do perform the steps as described above and are preferably implemented in the form of software modules.

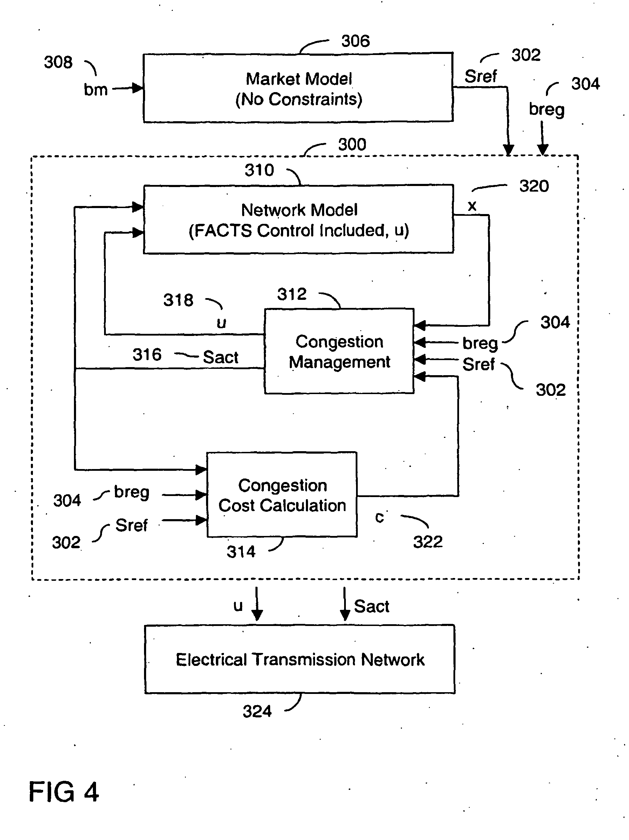

Fig.4 schematically depicts the basic approach for managing congestion in an electrical transmission network, according to an embodiment of the present invention. It is assumed that generation re-dispatch alone is enough to handle the congestion constraints and so load shedding is not required. For the purpose of illustration, the arrows in Fig.4 describe a hypothetical iterative process, however the preferred way of obtaining a self-consistent and optimised solution makes use of commercial solvers as discussed further below.

In Fig.4, a model for managing congestion 300 includes the computational blocks employed by the mechanism of the present invention. Model for managing congestion 300 takes as input a reference generation schedule $S_{ref}$ 302 and regulating bids for up-regulation and down-regulation $b_{reg}$ 304. The reference generation schedule $S_{ref}$ 302 is generated by a market model 306 assuming no constraints. Market model 306 takes as input a number of market participant bids $b_m$ 308. This way of modelling $S_{ref}$ 302 is consistent with most energy market settlement mechanism, in which a system price is first found by using all the bids submitted by market participants without considering any binding transmission constraints. In an embodiment of the invention, $S_{ref}$ 302 is provided by the means for generating a reference schedule 202.

An exemplary model for managing congestion 300 includes a network model 310, a congestion management block 312, and a congestion cost calculation block 314. The congestion management block 312 takes as input the reference generation schedule $S_{ref}$ 302 and the regulating bids $b_{reg}$ 304, as well as a congestion cost $c_{con}$ and a power flow $x_{pf}$. Cost $c_{con}$ and flow $x_{pf}$ both belong to a particular power flow distribution consistent with the respective transmission capabilities of the network and defined by an actual generation schedule $S_{act}$ 316 in conjunction with actual set points $u_{sp}$ 318 of the PFDs. Both the actual generation schedule $S_{act}$ 316 and the actual set points $u_{sp}$ 318 are suggested by congestion management block 312, and taken as input by the network model 310 generating the power flow solution $x_{pf}$ 320. Congestion cost calculation block 314 takes as inputs the actual generation schedule $S_{act}$ 316, the regulating bids $b_{reg}$ 304, and the reference generation schedule $S_{ref}$ 302 and generates the congestion cost $c_{con}$ 322. The optimized ultimate values of the actual generation schedule $S_{act}$ 316 and the actual set points $u_{sp}$ 318 are finally applied on an electrical power transmission network 324 to minimize congestion costs.

In the case of no demand elasticity, the congestion cost is the difference of the generation costs taking and not taking congestion constraints into account and is therefore formulated as a function of the actual generation schedule $S_{act}$ 316 with congestion and the reference generation schedule $S_{ref}$ 302 before taking congestion into account. The constraints or inequalities of the optimisation problem constrain both the set points $u_{sp}$ 318 and the actual generation schedule $S_{act}$ 316 not only via the power flow solution $x_{pf}$ 320, but also in a more direct way in the form of physical or operational limits to the settings and schedules. The optimisation problem is in a general way formulated as follows:

$$\min \quad C\left(x, S_{act}, S_{ref}, u\right) \tag{1}$$

subject to:

$$g\left(x, S_{act}, u\right) = 0 \text{ and } h\left(x, S_{act}, u\right) \leq 0.$$

wherein g(.) represents the equality constraint(s) while h(.) represents the inequality constraint(s). A typical set for g(.) and h(.) would be:

$$\sum_i p_i = D, i \in G \qquad \text{Power Balance}$$

$$C_i^{min} \leq \sum_i p_i \leq C_i^{max}, i \in G \qquad \text{Capacity Constraints}$$

$$f_k^{min} \leq f_k \leq f_k^{max}, k \in T \qquad \text{Line Thermal Constraints}$$

wherein D is total system load (and losses), G is the set of generating units, T is the transmission line set, $p_i$ is the generation from the $i^{th}$ generating unit and as such part of the actual generation schedule $S_{act}$, $C^{min}_i$ is the minimum

capacity of the $i^{th}$ generating unit, $C^{max}{}_i$ is the maximum capacity of the $i^{th}$ generating unit, $f_k$ is the power flow on the $k^{th}$ transmission line and as such part of the power flow solution $x_{pf}$, $f^{min}{}_k$ is the lower bound for the power flow on the $k^{th}$ transmission line, and $f^{max}{}_k$ is the upper bound for the power flow on the $k^{th}$ transmission line. The transmission constraints are the constraints imposed on the transfer capacity of a single or a group of transmission lines because of a thermal limit, voltage or other security constraints (e.g. n-1 contingencies). They are usually expressed in units of MW. Likewise, corresponding constraints apply to the values of the set points $u_{sp}$ of the PFDs.

Self-consistent solutions to the problem as set out above can be obtained by reverting to the commercial optimisation problem solver called "CPLEX" for solving linear, mixed-integer and quadratic programming problems (http://www.ilog.com/products/clex/).In an embodiment of the invention, model for managing congestion 300 is embodied in means for setting up an objective function 204 and means for solving an optimisation problem 206.

Transmission constraints may result in financial impact on different parties in energy markets. In general, these parties can be categorised into three groups: ISO, generating units and loads. Depending on the congestion cost calculation protocol, the parties can have a gain or a loss upon congestion. The methodology described in the present invention can be formulated to minimize the total congestion cost for all or any individual one of the parties.

In order to describe the mechanism employed by the present invention, an example of congestion cost minimisation for ISO is given below in the description of the present invention. The congestion pricing protocol is based on the counter-trading mechanism, which should be apparent to one skilled in the art. With this approach, there are no financial effects on the consumers, i.e., loads, in case of congestion, but there will be compensation paid by the ISO to the generating units to deviate from the original reference schedule $S_{ref}$ 302. As mentioned previously, in the case of no demand elasticity, the congestion cost is formulated as a function dependent on the generation dispatch, i.e. the difference of the actual schedule $S_{act}$ 316 and the reference schedule $S_{ref}$ 302 of the generating units. The costs that the ISO has to pay are the summation of two parts - costs for up-regulation and costs for down-regulation.

For down regulation:

$$C_{down} = \sum_i \left( \left( Sref_i - Sact_i \right) * \left( c_{ref} - c_{down} \right) \right) \qquad (2)$$

wherein $c_{ref}$ is the system clearing price, previously fixed on the basis of the demand and supply bids $b_m$ 308 of the loads and the generating units, respectively, $c_{down}$ is the price for down regulation, based on generating unit's regulating bids $b_{reg}$ 304, and i is the index for down-regulating generating units.

Similarly for up-regulation:

$$C_{up} = \sum_j \left( \left( Sact_j - Sref_j \right) * \left( c_{up} - c_{ref} \right) \right) \qquad (3)$$

wherein, $c_{ref}$ is the system clearing price, previously fixed on the basis of the demand and supply bids $b_m$ 308 of the loads and the generating units, respectively, $c_{up}$ is the price for up regulation based on generating unit's regulating bids ($b_{reg}$ 304), and j is the index for up-regulating generating units.

The total cost imposed on the ISO is therefore:

$$C_{total} = C_{down} + C_{up} \qquad (4)$$

In this case the cost function in equation (1) is therefore formulated as:

$$C\left( x, S_{act}, S_{ref}, u \right) = C_{total} \qquad (5)$$

The congestion cost computed by equation 5 may then be utilized for deciding the cost to be paid by the ISO to the generating units.

The system, as described in the present invention or any of its components, may be embodied in the form of a computer system. Typical examples of a computer system include a general-purpose computer, a programmed microprocessor, a micro-controller, a peripheral integrated circuit element, and other devices or arrangements of devices that are capable of implementing the steps that constitute the method of the present invention.

The computer system comprises a computer, an input device, and a display unit and may have access to the Internet. Computer comprises a microprocessor. Microprocessor is connected to a communication bus. Computer also includes a memory. Memory may include Random Access Memory (RAM) and Read Only Memory (ROM). Computer system further comprises storage device. It can be a hard disk drive or a removable storage drive such as a floppy disk drive, optical disk drive and the like. Storage device can also be other similar means for loading computer programs or other instructions into the computer system.

The computer system executes a set of instructions that are stored in one or more storage elements, in order to process input data. The storage elements may also hold data or other information as desired. The storage element may be in the form of an information source or a physical memory element present in the processing machine.

The set of instructions may include various commands that instruct the processing machine to perform specific tasks such as the steps that constitute the method of the present invention. The set of instructions may be in the form of a software program. The software may be in various forms such as system software or application software. Further, the software might be in the form of a collection of separate programs, a program module with a larger program or a portion of a program module. The software might also include modular programming in the form of object-oriented programming. In particular the modules of the semi-automatic converter may be coded a high level language such as, for example, C, C++, C#, and Java. The processing of input data by the processing machine may be in response to user commands, or in response to results of previous processing or in response to a request made by another processing machine.

While the preferred embodiments of the present invention have been illustrated and described, it will be clear that the present invention is only limited by scope of the present invention as described in the claims.

LIST OF DESIGNATIONS

102 Step of determining a reference generation schedule
104 Step of setting up an objective function
106 Step of solving an optimisation problem to minimize the objective function
108 Step of applying the set of decision variables to minimize congestion costs in the electrical transmission network
200 System for managing congestion
202 Means for determining a reference generation schedule
204 Means for setting up an objective function
206 Means for solving an optimisation problem
208 Means for applying the set of decision variables
300 Model for managing congestion
302 Reference generation schedule represented by $S_{ref}$
304 Up-regulation and down regulation bids represented by $b_{reg}$
306 Market model
308 Market participant bids represented by $b_m$
310 Network model
312 Congestion management block
314 Congestion cost calculation block
316 Actual generation schedule represented by $S_{act}$
318 Set point of FACTS device represented by u
320 Power flow solution represented by x
322 Output of congestion cost calculation block represented by c
324 Electrical Power Transmission Network

**Claims**

1. A method of managing congestion in an electrical power transmission network comprising electrically parallel transmission paths between a power generating unit and a load as well as a Power Flow Control Device (PFD) for adjusting a distribution of power flow on the transmission paths, the method comprising:

determining a reference generation schedule ($S_{ref}$) of the power generating unit;
setting up an optimisation problem comprising an objective function and a set of constraints, and being based on the reference generation schedule ($S_{ref}$), a regulating bid ($b_{reg}$), an actual generation schedule of the power generating unit ($S_{act}$), a power flow in the transmission network ($x_{pf}$), and a set point ($u_{sp}$) of the PFD, wherein the objective function represents congestion cost in the transmission network, and wherein the actual generation schedule ($S_{act}$) and the set point ($u_{sp}$) of the PFD are decision variables,

solving the optimisation problem to minimize the objective function for a set of decision variables respecting the set of constraints; and

applying the set of decision variables to minimize congestion costs in the electrical power transmission network.

2. The method according to claim 1, comprising

determining the reference generation schedule ($S_{ref}$) based on supply and demand bids ($b_m$) from the power generating unit and the load.

3. The method according to claim 1, comprising

setting up the optimisation problem based exclusively on a bid for regulation ($b_{reg}$) from the power generating unit, and comprising an objective function representing a cost to be paid by an Independent System Operator (ISO) to the power generating unit.

4. A system for managing congestion in an electrical power transmission network comprising electrically parallel transmission paths between a power generating unit and a load as well as a Power Flow Control Device (PFD) for adjusting a distribution of power flow on the transmission paths, the system comprising:

means (202) for determining a reference generation schedule ($S_{ref}$) of the power generating unit;

means (204) for setting up an optimisation problem comprising an objective function and a set of constraints, and being based on the reference generation schedule ($S_{ref}$), a regulating bid ($b_{reg}$), an actual generation schedule of the power generating unit ($S_{act}$), a power flow in the transmission network ($x_{pf}$), and a set point ($u_{sp}$) of the PFD, wherein the objective function represents congestion cost in the electrical transmission network, and wherein the actual generation schedule ($S_{act}$) and the set point ($u_{sp}$) of the PFD are decision variables;

means (206) for solving the optimisation problem to minimize the objective function for a set of decision variables respecting the set of constraints; and

means (208) for applying the set of decision variables to minimize congestion costs in the electrical power transmission network.

5. The system according to claim 4, **characterized in that** the PFD comprises at least one of an at least one series capacitor, at least one Phase-Angle Reactor (PAR), at least one series reactor, and at least one Flexible Alternating Current Transmission Systems (FACTS) device.

6. The system according to claim 5, **characterized in that** it comprises means (202) for determining a reference generation schedule ($S_{ref}$) of a plurality of power generating units; and means (204) for setting up an optimisation problem based on the reference generation schedule ($S_{ref}$) and an actual generation schedule ($S_{act}$) of the plurality of power generating units.

7. A computer program for managing congestion in an electrical power transmission network comprising electrically parallel transmission paths between a power generating unit and a load as well as a Power Flow Control Device (PFD) for adjusting a distribution of power flow on the transmission paths, the computer program comprising computer program code means to make, when the computer program is loaded in an internal memory of a digital computer, said computer minimize an objective function for a set of decision variables respecting a set of constraints, wherein the objective function and the set of constraints are part of an optimisation problem being based on a reference generation schedule ($S_{ref}$) of a power generating unit, a regulating bid ($b_{reg}$), an actual generation schedule of the power generating unit ($S_{act}$), a power flow in the transmission network ($x_{pf}$), and a set point ($u_{sp}$) of the PFD, and wherein the objective function represents congestion cost in the transmission network, and wherein the actual generation schedule ($S_{act}$) and the set point ($u_s p$) of the PFD are the decision variables.

**Patentansprüche**

1. Verfahren zur Stauverwaltung in einem elektrischen Stromübertragungsnetz, das elektrisch parallele Übertragungspfade zwischen einer Stromerzeugungseinheit und einer Last sowie eine Stromflusssteuereinrichtung bzw. PFD zum Justieren einer Verteilung des Stromflusses auf den Übertragungspfaden umfasst, wobei das Verfahren die folgenden Schritte umfasst:

Bestimmen eines Referenzerzeugungsablaufplans ($S_{ref}$) der Stromerzeugungseinheit;
Herstellen eines Optimierungsproblems, das eine Zielfunktion und eine Menge von Nebenbedingungen umfasst und auf dem Referenzerzeugungsablaufplan ($S_{ref}$), einem Regelungsgebot ($b_{reg}$), einem tatsächlichen Erzeugungsablaufplan der Stromerzeugungseinheit ($S_{act}$), einem Stromfluss in dem Übertragungsnetz ($x_{pf}$) und einem Sollwert ($u_{sp}$) der PFD basiert, wobei die Zielfunktion Staukosten in dem Übertragungsnetz repräsentiert und wobei der tatsächliche Erzeugungsablaufplan ($S_{act}$) und der Sollwert ($u_{sp}$) der PFD Entscheidungsvariablen sind,
Lösen des Optimierungsproblems, um die Zielfunktion für eine Menge von Entscheidungsvariablen, die der Menge von Nebenbedingungen genügt, zu minimieren; und
Anwenden der Menge von Entscheidungsvariablen, um Staukosten in dem elektrischen Stromübertragungsnetz zu minimieren.

2. Verfahren nach Anspruch 1, mit dem folgenden Schritt:

Bestimmen des Referenzerzeugungsablaufplans ($S_{ref}$) auf der Basis von Nachfrage- und Angebot-Geboten ($b_m$) von der Stromerzeugungseinheit und der Last.

3. Verfahren nach Anspruch 1, mit dem folgenden Schritt:

Herstellen des Optimierungsproblems auf der ausschließlichen Basis eines Gebots zur Regelung ($b_{reg}$) von der Stromerzeugungseinheit und mit einer Zielfunktion, die durch einen unabhängigen Systembetreiber bzw. ISO an die Stromerzeugungseinheit zu zahlende Kosten repräsentiert.

4. System zur Stauverwaltung in einem elektrischen Stromübertragungsnetz, das elektrisch parallele Übertragungspfade zwischen einer Stromerzeugungseinheit und einer Last sowie eine Stromflusssteuereinrichtung bzw. PFD zum Justieren einer Verteilung des Stromflusses auf den Übertragungspfaden umfasst, wobei das Verfahren die folgenden Schritte umfasst:

Mittel (202) zum Bestimmen eines Referenzerzeugungsablaufplans ($S_{ref}$) der Stromerzeugungseinheit;
Mittel (204) zum Herstellen eines Optimierungsproblems, das eine Zielfunktion und eine Menge von Nebenbedingungen umfasst und auf dem Referenzerzeugungsablaufplan ($S_{ref}$), einem Regelungsgebot ($b_{reg}$), einem tatsächlichen Erzeugungsablaufplan der Stromerzeugungseinheit ($S_{act}$), einem Stromfluss in dem Übertragungsnetz ($x_{pf}$) und einem Sollwert ($u_{sp}$) der PFD basiert, wobei die Zielfunktion Staukosten in dem elektrischen Übertragungsnetz repräsentiert und wobei der tatsächliche Erzeugungsablaufplan ($S_{act}$) und der Sollwert ($u_{sp}$) der PFD Entscheidungsvariablen sind;
Mittel (206) zum Lösen des Optimierungsproblems, um die Zielfunktion für eine Menge von Entscheidungsvariablen, die der Menge von Nebenbedingungen genügt, zu minimieren; und
Mittel (208) zum Anwenden der Menge von Entscheidungsvariablen, um Staukosten in dem elektrischen Stromübertragungsnetz zu minimieren.

5. System nach Anspruch 4, **dadurch gekennzeichnet, dass** die PFD mindestens eine der folgenden Alternativen umfasst: mindestens einen Reihenkondensator, mindestens einen Phasenwinkelreaktor bzw. PAR, mindestens einen Serienreaktor und mindestens eine Einrichtung der Flexible Alternating Current Transmission Systems bzw. FACTS.

6. System nach Anspruch 5, **dadurch gekennzeichnet, dass** es Folgendes umfasst: Mittel (202) zum Bestimmen eines Referenzerzeugungsablaufplans ($S_{ref}$) mehrerer Stromerzeugungseinheiten; und Mittel (204) zum Herstellen eines Optimierungsproblems auf der Basis des Referenzerzeugungsablaufplans ($S_{ref}$) und eines tatsächlichen Erzeugungsablaufplans ($S_{act}$) der mehreren Stromerzeugungseinheiten.

7. Computerprogramm zur Stauverwaltung in einem elektrischen Stromübertragungsnetz, das elektrisch parallele Übertragungspfade zwischen einer Stromerzeugungseinheit und einer Last sowie eine Stromflusssteuereinrichtung bzw. PFD zum Justieren einer Verteilung des Stromflusses auf den Übertragungspfaden umfasst, wobei das Computerprogramm Computerprogrammcodemittel umfasst, um zu bewirken, dass, wenn das Computerprogramm in einen internen Speicher eines digitalen Computers geladen wird, der Computer eine Zielfunktion für eine Menge von Entscheidungsvariablen, die einer Menge von Nebenbedingungen genügt, minimiert, wobei die Zielfunktion und die Menge von Nebenbedingungen Teil eines Optimierungsproblems sind, das auf einem Referenzerzeugungsablaufplan ($S_{ref}$), einer Stromerzeugungseinheit, einem Regelungsgebot ($b_{reg}$), einem tatsächlichen Erzeugungsablaufplan der Stromerzeugungseinheit ($S_{act}$), einem Stromfluss in dem Übertragungsnetz ($x_{pf}$) und einem Sollwert ($u_{sp}$) der PFD basiert und wobei die Zielfunktion Staukosten in dem Übertragungsnetz repräsentiert und wobei der tatsächliche Erzeugungsablaufplan ($S_{act}$) und der Sollwert ($u_{sp}$) der PFD die Entscheidungsvariablen sind.

**Revendications**

1. Procédé de gestion de la congestion dans un réseau de transmission d'énergie électrique, comprenant des trajets de transmission électriquement parallèles entre une unité génératrice d'énergie et une charge ainsi qu'un dispositif de pilotage de flux d'énergie (PFD) pour ajuster une distribution du flux d'énergie sur les trajets de transmission, le procédé comprenant les opérations consistant à :

   déterminer un programme de production de référence ($S_{ref}$) de l'unité génératrice d'énergie ;
   poser un problème d'optimisation comprenant une fonction objectif et un ensemble de contraintes, et tout en étant fondé sur le programme de production de référence ($S_{ref}$), une soumission de régulation ($b_{reg}$), un programme de production réel de l'unité génératrice d'énergie ($S_{act}$), un flux d'énergie dans le réseau de transmission ($x_{pf}$) et un point de consigne ($u_{sp}$) du PFD, cas dans lequel la fonction objectif représente le coût de congestion dans le réseau de transmission, et cas dans lequel le programme de production réel ($S_{act}$) et le point de consigne ($u_{sp}$) du PFD sont des variables de décision ;
   résoudre le problème d'optimisation afin de minimiser la fonction objectif pour un ensemble de variables de décision respectant l'ensemble de contraintes ; et
   appliquer l'ensemble des variables de décision afin de minimiser les coûts de congestion dans le réseau de transmission d'énergie électrique.

2. Procédé selon la revendication 1, comprenant l'opération consistant à :

   déterminer le programme de production de référence ($S_{ref}$) sur la base des soumissions Offre et Demande ($b_m$) provenant de l'unité génératrice d'énergie et de la charge.

3. Procédé selon la revendication 1, comprenant l'opération consistant à :

   poser le problème d'optimisation exclusivement fondé sur une soumission pour la régulation ($b_{reg}$) provenant de l'unité génératrice d'énergie, et comprenant une fonction objectif laquelle représente un coût devant être payé par un gestionnaire de système indépendant (ISO) à l'unité génératrice d'énergie.

4. Système de gestion de la congestion dans un réseau de transmission d'énergie électrique, comprenant des trajets de transmission électriquement parallèles entre une unité génératrice d'énergie et une charge ainsi qu'un dispositif de pilotage de flux d'énergie (PFD) pour ajuster une distribution du flux d'énergie sur les trajets de transmission, le système comprenant :

   des moyens (202) pour déterminer un programme de production de référence ($S_{ref}$) de l'unité génératrice d'énergie ;
   des moyens (204) pour poser un problème d'optimisation comprenant une fonction objectif et un ensemble de contraintes, et tout en étant fondé sur le programme de production de référence ($S_{ref}$), une soumission de régulation ($b_{reg}$), un programme de production réel de l'unité génératrice d'énergie ($S_{act}$), un flux d'énergie dans le réseau de transmission ($x_{pf}$) et un point de consigne ($u_{sp}$) du PFD, cas dans lequel la fonction objectif représente le coût de congestion dans le réseau de transmission, et cas dans lequel le programme de production réel ($S_{act}$) et le point de consigne ($u_{sp}$) du PFD sont des variables de décision ;
   des moyens (206) pour résoudre le problème d'optimisation afin de minimiser la fonction objectif pour un ensemble de variables de décision respectant l'ensemble de contraintes ; et
   des moyens (208) pour appliquer l'ensemble des variables de décision afin de minimiser les coûts de congestion dans le réseau de transmission d'énergie électrique.

5. Système selon la revendication 4, **caractérisé en ce que** le PFD comporte au moins un poste parmi les postes suivants, à savoir au moins un condensateur monté en série, au moins un réacteur d'angle de phase (PAR), au moins un réacteur monté en série, et au moins un dispositif FACTS (systèmes de transmission flexibles de courant alternatif).

6. Système selon la revendication 5, **caractérisé en ce qu**'il comprend des moyens (202) pour déterminer un programme de production de référence ($S_{ref}$) d'une pluralité d'unités génératrices d'énergie ; et des moyens (204) pour poser un problème d'optimisation fondé sur le programme de production de référence ($S_{ref}$) et un programme de production réel ($S_{act}$) de la pluralité d'unités génératrices d'énergie.

7. Programme informatique destiné à gérer la congestion dans un réseau de transmission d'énergie électrique, comprenant des trajets de transmission électriquement parallèles entre une unité génératrice d'énergie et une charge ainsi qu'un dispositif de pilotage de flux d'énergie (PFD) pour ajuster une distribution du flux d'énergie sur les trajets de transmission, le programme informatique comportant des moyens de code-programme informatique qui, lorsque le programme informatique est chargé dans une mémoire interne d'un ordinateur numérique, obligent ledit ordinateur à minimiser une fonction objectif pour un ensemble de variables de décision respectant un ensemble de contraintes, cas dans lequel la fonction objectif et l'ensemble de contraintes font partie d'un problème d'optimisation lequel est fondé sur un programme de production de référence ($S_{ref}$) d'une unité génératrice d'énergie, une soumission de régulation ($b_{reg}$), un programme de production réel de l'unité génératrice d'énergie ($S_{act}$), un flux d'énergie dans le réseau de transmission ($x_{pf}$) et un point de consigne ($u_{sp}$) du PFD, et cas dans lequel la fonction objectif représente le coût de congestion dans le réseau de transmission, et cas dans lequel le programme de production réel ($S_{act}$) et le point de consigne ($u_{sp}$) du PFD sont des variables de décision.

TCSC

$P_{tr}$

SVC

FIG 1

Start

Determine a reference generation schedule — 102

Set up an optimisation problem comprising an objective function and a set of constraints — 104

Solve an optimisation problem to minimize the objective function — 106

Apply the set of decision variables to minimize congestion costs in the electrical transmission network — 108

Stop

FIG 2

200

202 — Means for determining a reference generation schedule

204 — Means for setting up an objective function

206 — Means for solving an optimisation problem

208 — Means for applying the set of decision variables

To Electrical Transmission Network

FIG 3

FIG 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG et al.** Optimal allocation of transmission rights in systems with FACTS devices. *IEE PROCEEDINGS: GENERATION, TRANSMISSION AND DISTRIBUTION, INSTITUTION OF ELECTRICAL ENGINEERS,* 13 May 2002, vol. 149 (3), ISSN 1350 - 2360, 359-366